# EUROPEAN PATENT APPLICATION

(11) **EP 4 481 003 A1**
(43) Date of publication of application: **25.12.2024**
(21) Application number: 23180976.5
(22) Date of filing: 22.06.2023
(51) Int. Cl.: C09D 1/02, C09D 5/02

(54) **ROOM AIR AND SURFACE CLEANING**

(71) Applicant: Depco-Trh Pty Ltd, Williamstown Victoria 3016 (AU)
(72) Inventor: Price, David, Williamstown, 3016 (AU); Giansiracusa, Joseph, Ascot Vale, 3032 (AU)
(74) Representative: Seyer & Nobbe Patentanwälte PartmbB

(57) **Abstract**

The present invention relates to reducing pollutants and pathogens in indoor air and on indoor surfaces. The object of the present invention is to purify indoor air and destruction of pollutants and pathogens on indoor surfaces. To solve the problem according to the invention a surface with a coating consisting of calcium carbonate, a photocatalyst and potassium silicate or sol-silicate is used, and to increase the efficiency of the process simultaneous irradiating of the photocatalyst on the surface with radiation from a deep UVC radiation source of 222nm wavelength takes place in order to kill any pathogens entrained in the airflow and to activate the photocatalyst to destroy pollutants.

## Description

The invention relates to reducing pollutants and pathogens in indoor air and on indoor surfaces.

Patent application EP3896043 describes a high opacity laminate surface which includes melamine in the formulation, and includes a mineral silicate layer and a photocatalyst functioning in sunlight and indoor lighting, whereby a laminate material with a mineral silicate layer and a photocatalyst are claimed. However, the inclusion of melamine (CAS 108-78-1) as a component of the surface coating brings the commercial viability of the patent into question as melamine has recently been added by the European Chemicals Agency (ECHA) to the Candidate List of Substances of Very High Concern (SVHC) which can result in future restrictions in the use of melamine. Furthermore, it is not mentioned in EP3896043 that the UVC component of sunlight does not reach Earth and that the photocatalyst in the laminate surface can activated by a UVC radiation source.

Unlike outdoor applications where the surface containing a photocatalyst can be impacted by wind and rain to help prevent the photocatalyst in the surface from being covered and thereby restricting contact with pollutants and reducing its effectiveness, indoor applications where a photocatalyst is present in a surface are generally without consideration that the surface and therefore the photocatalyst may over time inadvertently acquire a coating and reduce its effectiveness. To be effective a photocatalyst requires light, air / moisture and direct contact with the pollutant. A surface coating that does not create a closed surface, has a component to reduce agglomeration of the photocatalyst, and of itself not damaged by the activation of the photocatalyst is the preferred coating material.

When the air in a room or a large indoor space is not regularly replaced by appropriate ventilation there exists the opportunity for VOCs, pathogens and undesirable airborne pollution to accumulate and to have a negative effect on the amenity of the indoor environment. In some cases this is referred to as "sick house syndrome". The quality of indoor air can affect the health of people inhabiting a room. Immediate effects of polluted indoor air may be irritation of the eyes, nose and throat, headaches and or allergic reactions. Indoor air may be polluted by generation of pollutants from sources such as furniture and carpets and accumulate due to poor ventilation, or by pollution such as traffic smog entering the room through open doors, windows or the ventilation system. People using a waiting room at a doctor's consulting rooms or other commercial or public facilities where people are in close proximity, may also spread undesirable pathogens. Pollutants and pathogens may accumulate in indoor air and on indoor surfaces.

More recently the Covid-19 virus pandemic has hastened the development of surface treatments to destroy viruses, for example the *Protecton* paint technology (Nippon Paint Holdings, Japan). There are air purifiers claiming to capture and destroy formaldehyde, one such device being Dyson Purifier Hot+Cool ^{™} Formaldehyde purifying fan heater. Other companies claim air cleaning textiles (GUDRIN by IKEA) may help people to have a better life at home through cleaner air, consisting of a mineral based photocatalyst coating applied to a textile. Patent applications have been made using UVC for decontamination, for example DE10 2020 204 403A1 and EP2674208A1, however working with UVC at wavelength that is harmful to human wellbeing and therefore the UVC emitting devices are placed into a confining framework. Recently the company BeaconLight (Chicago USA) is offering a UVC device for indoor applications based on Ushio Care222 technology.

The object of the present invention is to create a high opacity surface containing a photocatalyst, using materials to reduce agglomeration of the photocatalyst and which are predominately non-film forming, and demonstrate a method to enhance the reduction pollutants and pathogens in interior air and on interior surfaces by providing an airflow and deep UVC radiation of 222nm over the surfaces that contain a photocatalyst. Preferably the airflow and the deep UVC radiation is simultaneously directed at the surface containing a photocatalyst to activate the photocatalyst.

To solve the problem according to the invention the surface coating is a mixture of calcium carbonate, a photocatalyst and a liquid potassium silicate or sol-silicate wherein the calcium carbonate content of the coating on a solids basis is higher than the content of photocatalyst, and together the calcium carbonate and photocatalyst exceed 50% of the coating on a solids basis. The high opacity surface coating consisting of calcium carbonate, a photocatalyst and potassium silicate or sol-silicate may further include pigments to achieve a particular colour, preferably inorganic pigments with a high light fastness, an antimicrobial agent, and a binder/dispersing agent. The coating may be applied in more than one coating step, and a photocatalyst included in the high opacity coating is preferably concentrated in the outermost region of the coating. A synthetic source of deep UVC 222nm radiation is located in the room, and as well as natural sunlight are used to activate the photocatalyst. Advantageously the synthetic UVC 222nm radiation source can be used when no sunlight is available.

To increase the efficiency of the method to reduce pollutants and pathogens in indoor air and on indoor surfaces an airflow is created into the path of a deep UVC 222nm radiation zone and onto a surface containing the photocatalyst. The simultaneous irradiation of the photocatalyst in the surface by the deep UVC radiation source of 222nm wavelength activates the photocatalyst and kills any pathogens or pollutants entrained in the airflow and on the surface containing the photocatalyst. This triple effect of (a) UVC 222nm radiation killing pathogens in the radiation zone while (b) activating the photocatalyst to (c) destroy pollutants such as formaldehyde, NOx, SOx that come into contact with the photocatalyst makes the method more efficient compared to utilizing only one step such as UVC 222nm radiation, or the photocatalyst activated by sunlight alone.

In a first example of the coating mixture, calcium carbonate is 55.5% of the solids, the photocatalyst 5.5% of the solids and potassium silicate is approximately 39% of the solids. The materials used in making the coating were: 30g of Marble Dust (Melbourne Art Supplies AU, Langridge Marble Dust), 3g of photocatalyst KRONOClean 7050 (Kronos Leverkusen DE), and 70g of potassium silicate paint (Durobond Sydney AU, Off-white approximately 30% solid content). A binder / dispersing agent was not used but is an optional additional material. The resulting paint was applied to piece of 5 layer 15mm plywood (Carter Holt Harvey, Myrtleford AU) that was earlier laminated with a 70g/m² nonwoven glass fleece (Ahlstrom Finland) using Allfix all-purpose adhesive (Selleys). Measurements after the coating showed the wet coating weight as 430g/m², and after drying overnight in ambient room temperature as 260g/m².

In a second example of the coating mixture, calcium carbonate is approximately 50.8% of the solids, the photocatalyst 5.1% of the solids, potassium silicate is approximately 35.6% of the solids and a binder/dispersant approximately 8.2%. The materials used in making a coating were: 30g of Marble Dust (Melbourne Art Supplies AU, Langridge Marble Dust), 3g of photocatalyst KRONOClean 7050 (Kronos Leverkusen DE), 70g of potassium silicate paint (Durobond Sydney AU, Alfalfa approximately 30% solid content), and16g (30% solids) binder / dispersing agent styrene maleic anhydride amic acid (Xiran^{®} SL40005 N30, Polyscope NL). The resulting mixture was applied to a piece of 18mm particleboard (Borg Manufacturing, Oberon AU) that was earlier laminated with a 70g/m² nonwoven glass fleece (Ahlstrom Finland) using Allfix all-purpose adhesive (Selleys). Measurements after the coating showed the wet coating weight as 679g/m², and after drying for 3 hours in ambient room temperature as 402g/m². After a light sanding with Grit 600 sandpaper the weight is 375g/m².

A third example was prepared by applying the coating mixture of example 2 to a 6mm OSB panel laminated with a 70g/m² nonwoven glass fleece. The wet coating weight was 412g/m², and after 3 hours in ambient room temperature weighed 211g/m². The different percentage weight loss between example 2 & 3 may be attributed to the different coating weights and the different substrate.

The source is calcium carbonate is not limited, however it is preferred that the calcium carbonate is the waste "marble dust" recovered from the mining and processing of marble deposits. Other sources of calcium carbonate may also be used including dolomite (Ca Mg (CO₃)₂), and when available in commercial quantities biogenic CaCOs such as shells or coral. It is also preferred that the calcium carbonate powder and the photocatalyst powder are mixed together before being dispersed in the liquid potassium silicate or sol-silicate paint.

There may be more than one coating layer applied to the surface and preferably the majority of the photocatalyst is in the outermost region of the coating layer. Furthermore, there may be an intermediate sanding of any individual layer, and optionally a silicate primer applied before the next coating layer. The coating may be applied directly to the surface of a substrate or be applied to a material layer attached to the surface, for example a material layer consisting of nonwoven glass fleece (glasvlies) or a paper or synthetic fibre based material layer. There may be more than one material layer, and the material layer may contain performance enhancing additives such as fire retardants. The surface of a coated item may be printed and, whether printed or not, may have a clear protective layer of unpigmented non-film forming potassium silicate.

Further advantageous embodiments according to the invention result from the sub-claims.

The efficiency of room air and surface cleaning is enhanced by the pathogen and or pollutant entrained in an airflow having contact with both the photocatalyst in a surface and exposure to UVC 222nm wavelength radiation. By creating airflow in a room and directing the airflow and UVC 222nm radiation onto the surface containing the photocatalyst, the productivity of a room cleaning system is significantly enhanced, more so if a comfortable ambient air temperature should be maintained. Published literature (MDPI catalysts 2021, 11, 966) shows the effect of temperature on photocatalytic activity on certain types of photocatalysts increases with increasing temperature, for example a TiO₂ photocatalyst with palladium or copper as co-catalysts. Published literature (Journal of Applied Microbiology, Volume 134, Issue 3, March 2023, lxad046) claims that UVC 222nm radiation is not considered harmful to humans. Published literature (MDPI molecules 2018, 23, 3095) confirms that UVC 222nm radiation is able to activate the photocatalyst cycle.

The combination of surfaces with a coating containing a photocatalyst that can be activated by UVC 222nm radiation, with devices emitting UVC 222nm radiation, and room airflow through the UVC 222nm radiation zone and onto the surface containing the photocatalyst, increases the effectiveness in cleaning the air and surfaces in a room. The meaning of a room is not limited to a room in a house, it includes offices, shops, schools, auditoriums, halls, and the like. A room may be a compartment on a train or a cabin on a ship.

While exposure to UV radiation can cause damage to human skin and eyes, studies available in the public domain have shown that deep UVC 222nm radiation is less harmful to humans thereby providing under appropriate circumstances a safe method for cleaning of the air without having to operate the UVC 222nm radiation device in an enclosed system. Furthermore, to take into consideration safety concerns, the placement of the UVC 222nm device and the direction of radiation in the upper section of a room or open space enhances the safety of the room air cleaning system. Recommendations for radiation exposure limits can be found in IEC 62471 "Photobiological Safety of Lamps and Lamp Systems". The scope of this standard is to provide guidance for the evaluation of the photobiological safety of lamps and lamp systems, excluding lasers, that emit light in the spectral region 200-3000 nm.

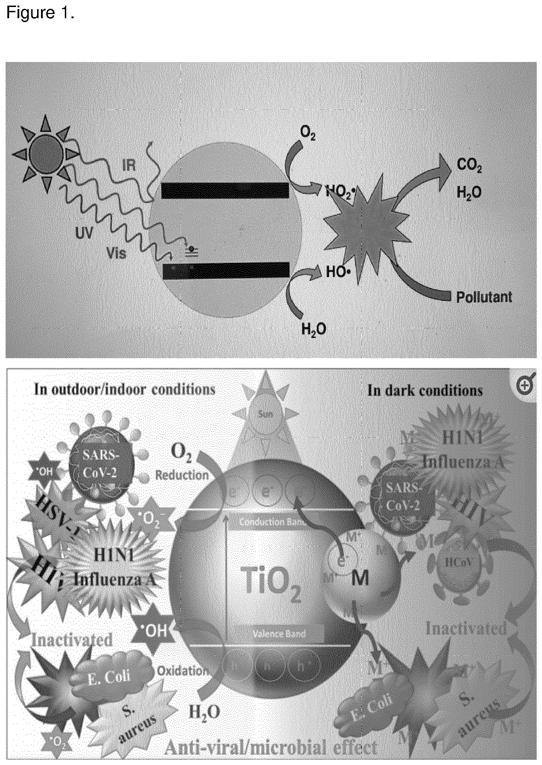

Examples of how a photocatalyst is activated is shown in Figure 1.

The combination of photocatalysts in the surface activated by UVC 222nm radiation and airflow through the radiation zone onto the surface containing the photocatalyst not only destroys VOCs by contact with the photocatalyst, also pathogens in the air are destroyed by the UVC 222nm radiation and the photocatalyst. Advantageously, the UVC 222nm radiation produced from a synthetic source such as excimer lamps (Ushio Japan), is repositionable and also able to operate at night when there is an opportunity to avoid human activity.

In a first aspect of the invention at least part of an existing wall and/or ceiling in a room are provided with a coating being a mixture of calcium carbonate, a photocatalyst and a liquid potassium silicate or sol-silicate paint. The coating may be applied directly to the surface of a wall and or a ceiling, or may be part of a material being applied to the surface of a wall and or ceiling. The material applied to the surface containing the photocatalyst may be for example a nonwoven glass fleece (glasvlies) or may be a paper or synthetic fibre based material, or may be a combination of these materials. The material applied to the wall and or ceiling may contain performance enhancing components, such as fire retarding additives.

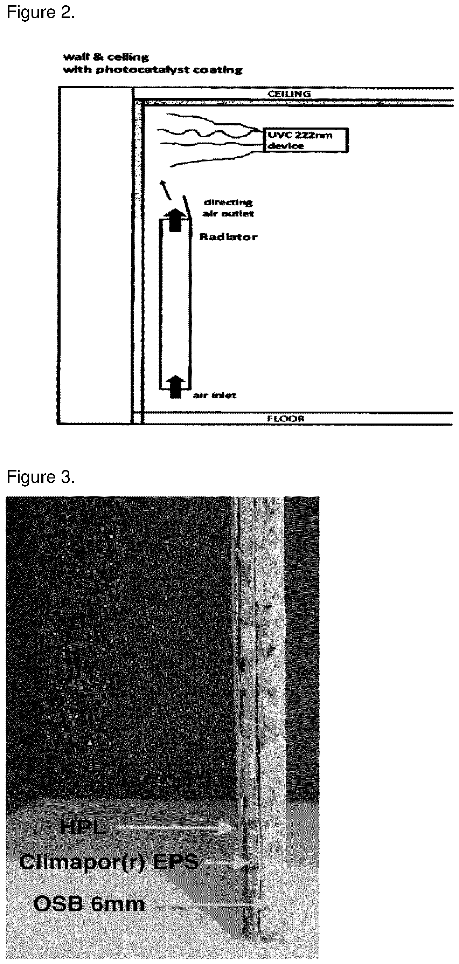

In a second aspect of the invention new wall panels and or new ceiling panels with a coating containing calcium carbonate, a photocatalyst and potassium silicate or sol-silicate are used to form at least part of a wall or ceiling structure, or are clad over part or all of the existing wall or ceiling structure. The substrate for the coating may be freely chosen from a variety of substrates, for example the substrate may be a plasterboard material (gipsplatte), solid wood or a wood based panel or a plastic sheet material such as acrylic or polycarbonate, or a rigid XPS extruded panel, or a high pressure laminate (HPL), continuous pressure laminate (CPL) or compact laminate, or a low pressure melamine panel (LPM). Preferably the new panels containing the photocatalyst are made from an environmentally friendly substrate, for example a wood based panel such as medium density fibreboard, particleboard, oriented strand board, plywood or cross laminated timber, preferably manufactured without a formaldehyde binder, or if a formaldehyde binder is used the emission level should not exceed E1 according to EN13896. The wall and or ceiling panels may have the coating containing a photocatalyst applied to the panel surface having a nonwoven glass fleece (glasvlies) or a paper or synthetic fibre based material attached to the panel and a coating containing a photocatalyst contained in or applied to the nonwoven glass fleece or paper or synthetic fibre based material. The material applied to the wall panel and or ceiling panel panel may contain performance enhancing components, for example fire retarding additives. The coating may be applied in more than one application. The photocatalyst component should be as close as possible to the outer surface of the coating. One or more preliminary layers without a photocatalyst may be applied to the substrate before any subsequent coating containing the photocatalyst is applied. The preliminary layer may be a primer, for example a primer used with a potassium silicate paint coating (Keim Silangrund, Keimfarben DE). In some applications only part of the panel has the coating containing a photocatalyst. Figure 3 is a HPL with an EPS interlayer (Climapor^{®}) and glued to a 6mm OSB panel, where the HPL has been coated with a silicate primer, followed by 2 coatings of a mixture of calcium carbonate, a photocatalyst and potassium silicate. Thin and lightweight panels such as HPL and CPL have an inherent handling advantage in that they may be easily attached, removed and reattached to a wall or ceiling by using a non-invasive method such as Velcro^{®} strips.

The reverse side of any coated panel of sheet may have a functional material coating or layer such as but not limited to heat reflection, electromagnetic radiation reflection, a moisture barrier, an airtight barrier, sound dampening or any combination of these functional objectives. An example of material used as the reverse layer is found in an expanded polystyrene material laminated with a thin aluminium metal sheet (Climapor^{®}, Saarpor Klaus Eckhardt GmbH DE).

In a third aspect of the invention a panel with the inventive coating containing the photocatalyst, is positioned in a room. The panel may be suspended from the ceiling or hung like a picture frame on a wall. The reverse side of the panel may have a functional material coating such as but not limited to heat reflection, electromagnetic radiation reflection, a moisture barrier, an airtight barrier, sound dampening or any combination of these functional objectives. When used as a room divider the panel may have the coating containing a photocatalyst on both sides of the panel.

In a fourth aspect of the invention, a renovation of the surfaces containing the photocatalyst can be made in-situ as and when required. If necessary the panel having the photocatalyst may be removed from the room and repaired off-site. The coating may be lightly sanded and recoated with the inventive coating, or a re-coating that may or may not include a photocatalyst. The renovation of a panel containing a coating with a photocatalyst should consider environmental aspects and where feasible and financially reasonable the panel repaired, refurbished or recycled. The panel with a coating containing a photocatalyst may be feature commercial advertisement, or may be an industrial design or be a unique art piece of considerable value. Preferably, the pigments used in achieving a colour or a printed motif are lightfast inorganic pigments. The panel with a coating containing a photocatalyst may be used for commercial advertising and replaced on a regular basis.

In a fifth aspect of the invention, a material layer of nonwoven glass fleece (glasvlies) or paper or synthetic fibre based material is impregnated and or coated with a mixture of calcium carbonate, a photocatalyst and potassium silicate or sol-silicate before being attached to a surface, a panel or a sheet. The impregnation and or coating of the nonwoven glass fleece (glasvlies) , paper or synthetic fibre materials may be a partial impregnation and a final coating applied after application of the material layer to a surface, panel or sheet.

In a sixth aspect of the invention, the TiO₂ photocatalyst in powder form is mixed with the calcium carbonate in powder form to improve distribution and reduced agglomeration of the TiO₂ photocatalyst when added to the liquid potassium silicate or sol-silicate paint. A dispersing agent may be added when the powders are mixed, or when the powders are added to the liquid silicate.

In a seventh aspect of the invention, a deep UVC 222nm radiation device in the room may be fixed or be capable of changing the position and direction of the UVC 222nm radiation. For example, the radiation device is manoeuvred by a programmable apparatus to change the direction of the radiation regularly or continuously thereby broadening the amount of surface with the photocatalyst being exposed to UVC 222nm radiation and simultaneously preventing the radiation being concentrated on one particular position of the surface. There is also provided a device to create a movement of air across the photocatalyst surface and into the radiation zone, or through the radiation zone and onto the photocatalyst surface. The device used to create a movement of air may be a radiator providing heated air, or a choice between heating and cooling air. The airflow is directed or deflected through the UVC 222nm radiation zone and onto the surface containing a photocatalyst, see Figure 2. A radiator may be attached to a wall or ceiling or be freestanding. To increase the available photocatalytic surface in the room the radiator may have one or move decorative panels, and the decorative panel surface of the radiator may be a coating consisting of calcium carbonate, a photocatalyst and potassium silicate or sol-silicate. The UVC 222nm radiation is also a source of radiation to activate the photocatalyst, in particular during the time when sunlight and or other synthetic light sources are not available or not turned on. The synthetically generated UVC 222nm radiation is reported to be less harmful to humans, for example from a filtered far UVC excimer lamp modules (Care222^{®} Ushio Japan). The published literature indicating that UVC radiation of 222nm wavelength is not considered harmful to humans allows the UVC 222nm radiation device to be used without the requiring the device to be physically enclosed, and allowing the UVC 222nm radiation to clean room air passing through the radiation zone as well as the radiation activating any photocatalyst in a surface in the radiation zone. Other UVC wavelength radiation for example of 254nm wavelength, are used in an enclosed system to avoid radiation harmful to humans. The company DURST (Bressanone Italy) promotes the Durst UVC-R Air Disinfection System which is an enclosed system which combines both air exchange and UV irradiation in one system.

The inventive system is used in a room or interior open spaces with surfaces that include a coating of calcium carbonate, a photocatalyst and potassium silicate or sol-silicate applied to the surfaces of wall panels, ceiling panels, door panels, room divider panels, pieces of furniture or functional equipment such as a radiator panel. The photocatalysts used in the surfaces must be able to be activated by UVC 222nm radiation. Air in the room is preferably circulated in a gentle manner and directed and or deflected across the surfaces containing the photocatalyst, while the device emitting UVC radiation source of 222nm wavelength is positioned to provide interaction with both the air moving through the radiation zone and with the photocatalyst in the surface of the coated item. The UVC 222nm radiation device may be fixed or be capable of changing the direction of the radiation. The change of direction may be a manual reorientation of the radiation direction, or preferably is a controlled device that regularly or continuously changes the direction of radiation thereby broadening the amount of surface with the photocatalyst being exposed to UVC 222nm radiation. Using a radiator to provide air at an optimal room temperature rather than in a cold room, for example around 21°C, enhances the photocatalytic function and provides a comfortable climate for people in the room or open space. At night when there is no sunlight and interior illumination is turned off, the action of the photocatalyst and the UVC 222nm radiation is able to continue providing a means of purifying the room air.
- Fig.1: schematics of how a photocatalyst works
- Fig.2: radiator and corresponding UVC 222nm device
- Fig.3: HPL panel with EPS interlayer & OSB substrate

## Claims

1. A coated surface used in a method for removing pollutants and pathogens from indoor air and on indoor surfaces comprising a mixture of calcium carbonate, a photocatalyst and potassium silicate or sol-silicate, and optionally a binder/dispersant, wherein the coating contains more than 50% calcium carbonate.

2. A coated surface according to claim 1, wherein the calcium carbonate is marble dust recovered from the mining and processing of marble slabs including dolomite, or wherein the calcium carbonate is from a biogenic source.

3. A coated surface used in a method for removing pollutants and pathogens from indoor air and on indoor surfaces according to claims 1 - 2, wherein the surface is a panel or a sheet and has at least on one side a coating of calcium carbonate, a photocatalyst and potassium silicate or sol-silicate covering part or all of the surface.

4. A panel or sheet according to claims 1 - 3, wherein the surface, panel or sheet is laminated with a nonwoven glass fleece (glasvlies) or a paper or synthetic fibre material and subsequently a coating of calcium carbonate, a photocatalyst and potassium silicate or sol-silicate is applied.

5. A panel or sheet according to claims 1 - 4, wherein the nonwoven glass fleece (glasvlies) or a paper or synthetic fibre material is fully or partially impregnated with calcium carbonate, a photocatalyst and potassium silicate or sol-silicate prior to being attached to the surface, panel or sheet.

6. A surface, panel or sheet according to claims 1 - 5, wherein there is an intermediate layer or primer not containing a photocatalyst located between the coating containing calcium carbonate, a photocatalyst and potassium silicate or sol-silicate and the substrate to prevent or limit radiation or photocatalytic damage to the substrate material or surface decoration.

7. A panel or sheet used in a method for removing pollutants and pathogens from indoor air and on indoor surfaces according to claims 1 - 6, wherein the panel or sheet is a plasterboard, or a wood based panel or a plastic sheet, or a rigid extruded XPS panel, or a high pressure laminate (HPL), or a continuous pressure laminate (CPL), or a compact laminate, or a low pressure laminated wood based panel (LPM).

8. A panel or sheet used in a method for removing pollutants and pathogens from indoor air and on indoor surfaces according to claims 1 - 7, wherein the reverse side of the panel or sheet has a functional material coating such as but not limited to heat reflection, electromagnetic radiation reflection, a moisture barrier, an airtight barrier, sound dampening or any combination of these functional objectives.

9. A method for reducing pollutants and pathogens in indoor air and on indoor surfaces, **characterized by** directing room airflow onto a surface coating as described in claim 1, whereby simultaneous irradiating of the photocatalyst in the surface with radiation from a deep UVC radiation source of 222nm wavelength takes place in order to kill any pathogens entrained in the airflow and activate the photocatalyst to destroy pollutants.

10. A method for reducing pollutants and pathogens in indoor air and on indoor surfaces according to Claim 9, wherein the airflow directed through the radiation zone and on to a surface containing a photocatalyst is created by an airflow device able to gather and circulate room air.

11. A method for reducing pollutants and pathogens in indoor air and on indoor surfaces according to claim 10, wherein the indoor air is captured by one or more suction points located in the room and drawn through the air inlet of one or more airflow devices.

12. A method for reducing pollutants and pathogens in indoor air and on indoor surfaces according to claim 11, wherein the airflow device is able to heat the room air.

13. A method for removing pollutants and pathogens from indoor air and on indoor surfaces according to Claims 9 - 13, wherein the UVC 222nm radiation is utilised in a room with or without sunlight or illumination from a visible light (VIS) source.

14. A method for removing pollutants and pathogens from indoor air and on indoor surfaces according to claims 10 - 14, wherein the type of photocatalyst arranged on or in any surface in the room is activated by UVC radiation of 222nm wavelength.

15. A method for removing pollutants and pathogens from indoor air and on indoor surfaces according to claims 10 - 14, wherein the UVC 222nm radiation device is manoeuvred by a programmable apparatus to change the direction of radiation regularly or continuously thereby broadening the amount of surface with the photocatalyst being exposed to UVC 222nm radiation and simultaneously preventing the radiation being concentrated on one particular position of the surface.
